(19) **Europäisches Patentamt / European Patent Office / Office européen des brevets**

(11) **EP 0 897 103 B2**

(12) **NEW EUROPEAN PATENT SPECIFICATION**

After opposition procedure

(45) Date of publication and mention of the opposition decision:
**20.04.2011 Bulletin 2011/16**

(45) Mention of the grant of the patent:
**28.05.2008 Bulletin 2008/22**

(21) Application number: **98202464.8**

(22) Date of filing: **22.07.1998**

(51) Int Cl.:
***G01F 23/20*** *(2006.01)*

(54) **Aircraft containing an apparatus for determining the quantity of fluid within a tank**

Flugzeug mit einer Vorrichtung zur Bestimmung einer Flüssigkeitsmenge in einem Behälter

Avion avec un dispositif pour la détermination d'une quantité de liquide dans un réservoir

(84) Designated Contracting States:
**DE FR GB**

(30) Priority: **12.08.1997 US 910193**

(43) Date of publication of application:
**17.02.1999 Bulletin 1999/07**

(73) Proprietor: **The Boeing Company**
**Chicago, IL 60606-2016 (US)**

(72) Inventor: **Wierenga, Scott M.**
**Everett,**
**Washington 98124-2207 (US)**

(74) Representative: **Small, Gary James**
**Carpmaels & Ransford**
**One Southampton Row**
**London**
**WC1B 5HA (GB)**

(56) References cited:
**DE-A- 3 737 658      DE-A- 19 519 712**
**FR-A- 2 533 695      GB-A- 2 289 542**
**GB-A- 2 316 176      US-A- 4 562 732**
**US-A- 5 133 212**

**Description**

**Background of the Invention**

1. Field of the Invention

The present invention relates to an aircraft comprising an apparatus for measuring a quantity of fluid within a tank, and, more particularly, to an aircraft comprising an apparatus for measuring the quantity and level of fluid in the tank by measuring the weight of the tank.

2. Background Information

**Brief Description of the Art**

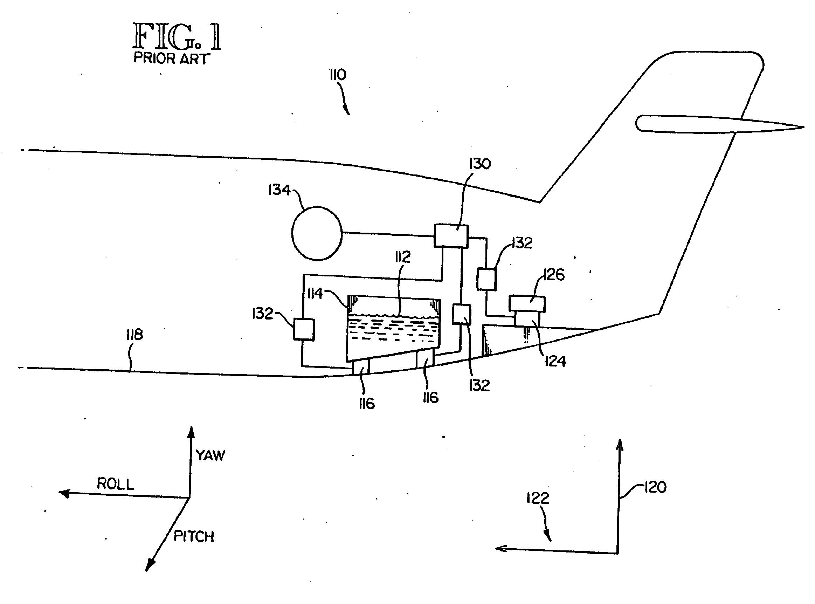

The present invention is directed toward a system for measuring the quantity of fluid in a tank located within an aircraft. Fig. 1 shows a prior art measurement system for measuring fluid 112 within a tank 114. The tank 114 may be a waste holding tank or a fuel tank.

A plurality of strain-gauge load cells 116, which provide analog voltage outputs that correspond proportionally to the load forces applied to cells 116, are positioned between the tank 114 and a common reference surface 118. The tank load cells 116 are positioned at all the mounting points for the tank 114, which typically totals four separate locations beneath the tank 114.

A system of this kind is disclosed in US-A-5 133 212. The plurality of load cells provides for measuring and compensating for increased and/or decreased gravitational forces or inertial forces that may be exerted upon the fluid resulting from the movement of the aircraft.

A reference strain-gauge load cell 124 is placed between a reference standard 126 of known weight and the common reference surface 118. The reference load cell 124 provides an analog voltage output in proportion to the load placed on the load cell 124 by the reference standard 126. The reference load cell 124 is also aligned to be sensitive to load forces generally parallel along an axis which is substantially normal to the common reference surface 118.

A Central Processing Unit (CPU) 130, is coupled to receive the analog voltage output from the load cells 116 and the reference load cell 124, and it converts these analog signals into output information on the level of the fluid 112 in the tank 114. An averaging device 132 electrically averages out short term transients appearing in the analog voltage output signals from the load cells 116. The CPU 130 invokes a program that adds the read-outs from the plurality of the load cells 116, and then divides this amount by the G-force, which is determined by the reference load cell 124. Finally, a read-out device 134, such as an analog dial, LCD or LED display, is operatively linked to the CPU 130 for displaying the level of the fluid 112 contained in the tank 114.

To properly measure the weight of the tank 114, the plurality of the load cells 116 are mounted along a plurality of points between the tank 116 and the reference surface 118. The requirement to process a plurality of signals from multiple load cells 116 and perform compensating operations based on the output of a specific reference load cell, such as the load cell 124, can increase the likelihood of errors and will increase maintenance costs, as well as increase CPU processing requirements. Accordingly, there is a need in the art for a fluid-level measuring system which is simple and has fewer parts requiring maintenance.

DE-A1-37 37 658 discloses an apparatus for measuring the tank content of an operational liquid tank on a motor vehicle. To achieve a sufficiently accurate vindication of the content of a tank fixed to the motor vehicle, especially a fuel tank, the latter is mounted to pivot about a horizontal axis and engages, in the region of its other side, in a torque pick-up with a force-measuring element, of which the output signal is evaluated to determine the respective weight of the filled tank as a measure of the tank content.

**Summary of the Invention**

The present invention relates to an aircraft, comprising an apparatus for measuring the amount of liquid in a tank mounted within said aircraft, said apparatus comprising:

- a tank-mount mechanically coupled to and surrounding said tank to prevent translational movement of said tank, said tank-mount being fastened about pivot points to a plurality of fixed structures mechanically coupled to the aircraft, such that movement of the tank is limited to rotation about a common axis going through orifices of said structures; said tank-mount having an extended end positioned on a side of said tank opposite to said plurality of pivot points, which extends outwardly from said tank;
- a load cell in contact with said extended end for providing a first signal proportional to a force Fs placed on said load cell by said extended end;

- a Central Processing Unit in electrical communication with said load cell, and which is arranged to process the first signal from said load cell and calculates the amount of the fluid in said tank based on the force Fs on said load cell, a distance A from the center of gravity said tank to the common axis, and a distance B from the common axis to where said extended end applies the load Fs to said load cell such that the actual weight FT of the tank and the fluid is calculated by the equation FT = (B/A) x (Fs); and

- an inclinometer electrically coupled to said Central Processing Unit, said inclinometer transmitting a second signal to said Central Processing Unit directly proportional to the angle of inclination of the airplane, wherein the Central Processing Unit is arranged to process the second signal and adjusts the relationship between the total weight of said tank and the force registered by the load cell accordingly.

## Brief Description of the Drawings

These and other features, aspects, and advantages of the present invention will become better understood with regard to the following descriptions, appended claims, and accompanying drawings where:

Fig. 1 shows a schematic diagram of a prior art apparatus for measuring the liquid level in a tank;
Fig. 2 shows a schematic diagram of an apparatus for measuring the level of fluid in a tank according to the present invention;
Fig. 3A shows a side view of a tank-mount of the apparatus for measuring the level of fluid in the tank;
Fig. 3B shows a bottom view of the tank-mount; and
Fig. 4 shows a side view of the tank and the pivoting tank-mount of the apparatus for measuring the quantity of fluid in the tank.

## Description of a Preferred Embodiment

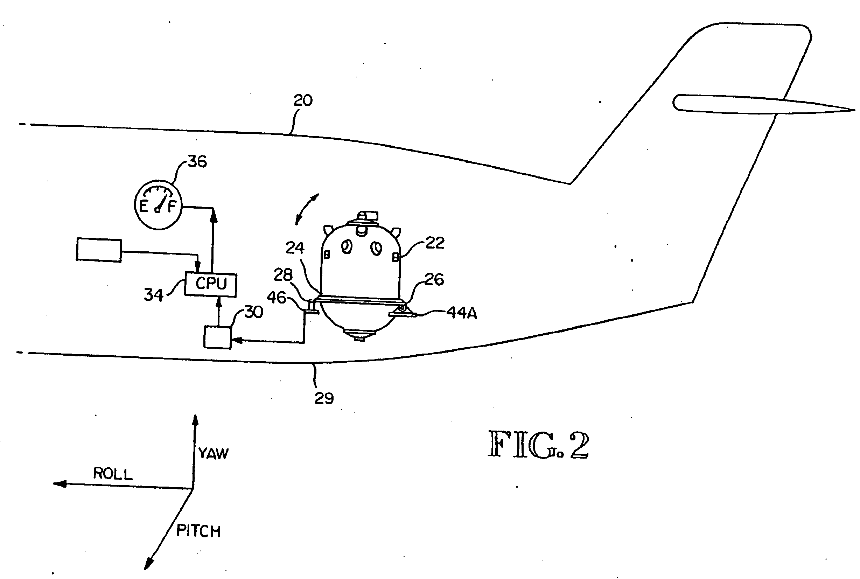

Referring to the drawings, Fig. 2 shows, in schematic diagram, an apparatus 20 for measuring the quantity of fluid in a tank 22 by measuring the weight of the tank 22 in a simple, easily maintainable manner.

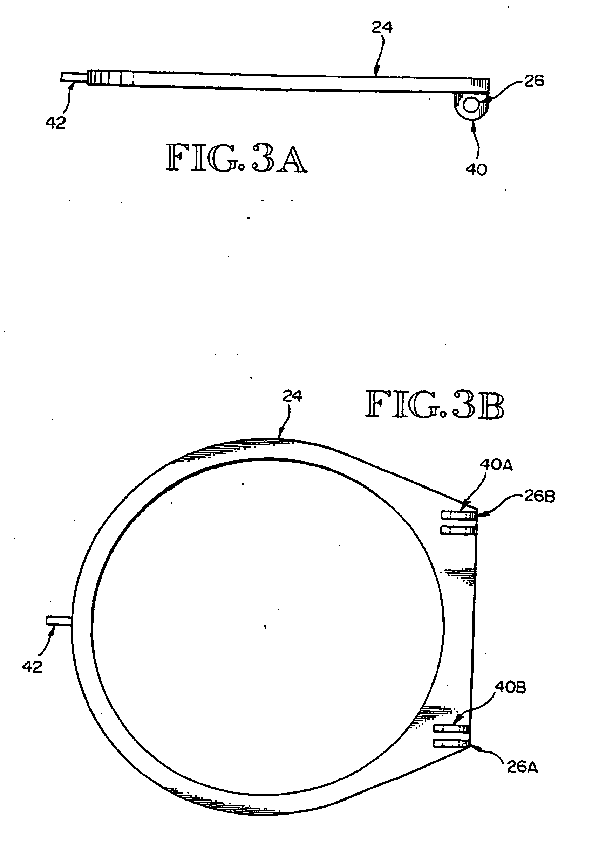

The apparatus 20 includes a cantilevered tank-mount 24, shown in Figs. 3A and 3B, which is part of the tank 22 which is or mechanically coupled to the tank 22, and pivotally mounted at first and second pivot points, 26A and 26B, respectively. The pivot points 26A and 26B work like hinges to limit the tank 22 to rotational motion about a shared axis defined by a first and second aligned axis 40A and 40B of the two pivot points 26A and 26B, respectively. The tank-mount 24 also includes an extended end 42, positioned opposite the first and second pivot points 26A and 26B, that engages a single load cell 28, as shown in Fig. 2. The single load cell 28 provides an analog voltage signal that directly corresponds to the static load forces applied by the extended end 42. The signal is processed by a filtering device 30, which is well known in the art, in electrical communication with the load cell 28. The apparatus 20 also includes a CPU 34 in electrical communication with the filtering device 30. The CPU 34 processes signals from the filter 30 and an inclinometer 32 and outputs a fluid level of the tank 22 on a display device 36.

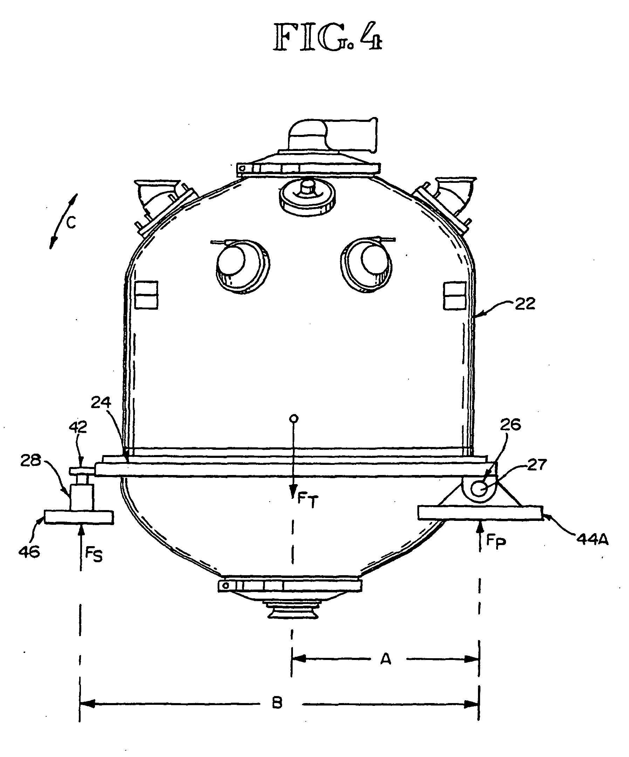

Fig. 4 shows one embodiment of the tank 22 of the apparatus 20. The tank-mount 24 is fastened about the pivot points 26A and 26B which are rotatingly engaged via pins 27 in an orifice of first and second fixed structures 44A and 44B. This limits the movement of the tank 22 to rotation about the pins 27 which are aligned along the common X axis. Thus, only movement and transient forces along the path of rotation C can be detected by the load cell 28. All other influences are mechanically eliminated. The fixed structures 44A and 44B hold the tank 22 up at the pivot points 26A and 26B by applying a force $F_p$ away from the aircraft body 29, shown in Fig. 2.

The load cell 28 is structurally connected to a second fixed structure 46, which is preferably coupled to the aircraft body 29, thereby keeping the cell 28 in a fixed position relative to the extended end 42, which rests upon the load cell 28 in a static state. The use of a single load-cell 28, which is installed opposite to the pivot points 26A and 26B makes the load-cell 28 easy to install, replace, and maintain. Thus, a large cost savings may be realized by using the apparatus 20 instead of prior art devices. Further, the tank 22 may contain sewage, and an easily maintainable system may reduce health hazards potentially caused by long term exposure to this type of environment. Further, the processing of a single signal is faster and requires a less complex processing means.

A force $F_s$ is applied to the sensing load cell 28 by the extended end 42 and it is proportional to the weight of the tank 22. The force $F_T$ (the weight of the tank) can be calculated by using the distance A of the pivot points 26A and 26B from the center of gravity $F_T$ of the tank 22, and the distance B of the pivot points 26 from the load cell 28 where:

$$F_s = (A/B) \times (F_T), \text{ and where } F_T = F_s (B/A).$$

Since distances A and B are known values for the installation, the relationship between the force $F_s$, measured by the sensing load cell 28, and the weight of the fluid in the tank can be easily calculated. Further, the weight of the fluid is linearly proportional to the volume of the fluid, which can be used to determine the fluid level or what percentage of the tank 22 is filled. Thus, by measuring the force $F_s$ at the load cell 28, the weight, quantity and level of the fluid within the tank 22 can be calculated.

The electrical output of load cell 28, which is proportional to the force $F_s$, is received by a filter 30 for filtering out transient signals due to extraneous events such as jolts in an airplane due to turbulence. This filtered signal is then transmitted from the filter 30 to the CPU 34, which uses the equation: $F_T = (B/A) \times F$, to determine the weight $F_T$ of and hence the volume and fluid level of the tank 22. The CPU 34 outputs this level to the display 36.

When the tank is at an angle other than horizontal, the distance A between the center of gravity and the pivot point varies as the tank is filled. In accordance with the invention, the CPU is electronically coupled to an inclinometer 32 which senses the change in the angle of attack of the airplane. This angle is then communicated to the CPU 34 which adjusts the relationship between total weight of fluid and force registered by the load cell 28 accordingly. This may be accomplished by a "look-up table" contained in the CPU which relates the force registered by the load cell 28 to the total weight of the fluid for each anticipated angle.

Accordingly, the present invention provides a simple and easily maintainable apparatus for measuring the fluid level within an aircraft without the need of multiple load cell sensors or the need to process multiple signals.

Except as otherwise disclosed herein, various components shown in outline or block form are individually well-known and their internal construction is not critical either to the making or the using of this invention, or to the description of the best mode of the invention.

While the detailed description above has been expressed in terms of specific examples, those skilled in the art will appreciate that many other configurations could be used to accomplish the purpose of the disclosed inventive apparatus. Accordingly, it will be appreciated that various modifications of the above-described embodiments may be made without departing from the scope of the invention. Therefore, the invention is to be limited only by the following claims.

**Claims**

1.   Aircraft, comprising an apparatus for measuring the amount of liquid in a tank (22) mounted within said aircraft, said apparatus comprising:

   - a tank-mount (24) mechanically coupled to and surrounding said tank (22) to prevent transitional movement of said tank (22), said tank-mount (24) being fastened about pivot points (26A, 26B) to a plurality of fixed structures (44A, 44B) mechanically coupled to the aircraft, such that movement of the tank is limited to rotation about a common axis going through orifices of said structures, said tank-mount (24) having an extended end (42) positioned on a side of said tank (22) opposite to said plurality of pivot points (26A, 26B), which extends outwardly from said tank (22).
   - a load cell (28) in contact with said extended end (42) for providing a first signal proportional to a force Fs placed on said load cell (28) by said extended end (42)
   - a Central Processing Unit (34) in electrical communication with said load cell (28), and which is arranged to process the first signal from said load cell (28) and calculate the amount of the fluid in said tank (22) based on the force Fs on said load cell (28), a distance A from the center of gravity of said tank (22) to the common axis (40A, 40B), and a distance B from the common axis (40A, 40B) to where said extended end (42) applies the load Fs to said load cell (28) such that the actual weight FT of the tank (22) and the fluid is calculated by the equation FT = (B/A) x (Fs); and
   - an inclinometer (32) electrically coupled to said Central Processing Unit (34), said inclinometer (32) transmitting a second signal to said Central Processing (34), directly proportional to the angle of inclination of the airplane, wherein the Central Processing Unit (34) is arranged to process the second signal and adjust the relationship between the total weight of said tank (22) and the force registered by the load cell (28) accordingly.

2.   Aircraft according to claim 1, wherein said apparatus further comprises a transient filter (30) electrically connected between said load cell (28) and said Central Processing Unit (34) to remove variations in the signal caused by sudden movement of the aircraft.

**Patentansprüche**

1. Flugzeug, umfassend ein Gerät zum Messen der Flüssigkeitsmenge in einem Behälter (22), der in dem Flugzeug montiert ist, wobei das Gerät umfasst:

   - eine Behälterhalterung (24), die mechanisch mit dem Behälter (22) gekoppelt ist und ihn umgibt, um eine Translationsbewegung des Behälters (22) zu verhindern, wobei die Behälterhalterung (24) an den Drehpunkten (26A, 26B) an einer Mehrzahl von festen Strukturen (44A, 44B) befestigt ist, die mechanisch mit dem Flugzeug gekoppelt sind, so dass die Bewegung des Behälters begrenzt ist auf die Rotation um eine gemeinsame Achse, die durch die Öffnungen dieser Strukturen durchgeht; wobei die Behälterhalterung (24) ein verlängertes Ende (42) aufweist, das auf einer Seite des Behälters (22) gegenüber der Mehrzahl aus Drehpunkten (26A, 26B) positioniert ist, das sich vom Behälter (22) nach außen erstreckt;
   - eine Kraftmesszelle (28) in Kontakt mit dem verlängerten Ende (42), um ein erstes Signal bereitzustellen, das proportional zu einer Kraft Fs ist, die durch das verlängerte Ende (42) auf die Kraftmesszelle (28) aufgebracht wird;
   - eine Zentraleinheit (34) in elektrischer Kommunikation mit der Kraftmesszelle (28), die angeordnet ist, um das erste Signal aus der Kraftmesszelle (28) zu verarbeiten und die Flüssigkeitsmenge im Behälter (22) basierend auf der auf die Kraftmesszelle (28) wirkenden Kraft Fs, einem Abstand A vom Mittelpunkt der Gravitation des Behälters (22) zu der allgemeinen Achse (40A, 40B) und einem Abstand B von der allgemeinen Achse (40A, 40B) zu dem Punkt, an dem das verlängerte Ende (42) die Kraft Fs auf die Kraftmesszelle (28) anwendet, zu berechnen, so dass das tatsächliche Gewicht FT des Behälters (22) und der Flüssigkeit mit der Gleichung FT = (B/A) x (Fs) berechnet wird; und
   - einen Neigungsmesser (32), der elektrisch mit der Zentraleinheit (34) gekoppelt ist, wobei der Neigungsmesser (32) ein zweites Signal an die Zentraleinheit (34) überträgt, das direkt proportional zu dem Neigungswinkel des Flugzeugs ist, wobei die Zentraleinheit (34) dazu ausgelegt ist, das zweite Signal zu verarbeiten und das Verhältnis zwischen dem Gesamtgewicht des Behälters (22) und der Kraft, die von der Kraftmesszelle (28) registriert wurde, entsprechend einzustellen.

2. Flugzeug nach Anspruch 1, wobei das Gerät ferner einen Transientenfilter (30) umfasst, der elektrisch zwischen der Kraftmesszelle (28) und der Zentraleinheit (34) verbunden ist, um Schwankungen in dem Signal zu entfernen, die durch eine plötzliche Bewegung des Flugzeugs verursacht werden.

**Revendications**

1. Avion, comprenant un appareil pour mesurer la quantité de liquide dans un réservoir (22) installé dans ledit avion, ledit appareil comprenant:

   - un montage de réservoir (24) couplé mécaniquement à et entourant ledit réservoir (22) pour empêcher un mouvement de translation dudit réservoir (22), ledit montage de réservoir (24) étant fixé autour de points pivotants (26A, 26B) à une pluralité de structures fixes (44A, 44B) couplées mécaniquement à l'avion de telle sorte que le mouvement du réservoir est limité à la rotation autour d'un axe commun passant à travers des orifices desdites structures;
   - ledit montage de réservoir (24) ayant une extrémité étendue (42) positionnée sur un côté dudit réservoir (22) opposé à ladite pluralité de points pivotants (26A, 26B), qui s'étend vers l'extérieur depuis ledit réservoir (22);
   - une cellule de charge (28) en contact avec ladite extrémité étendue (42) pour fournir un premier signal proportionnel à une force Fs placée sur ladite cellule de charge (28) par ladite extrémité étendue (42);
   - une Unité de Traitement Centrale (34) en communication électrique avec ladite cellule de charge (28), et qui est agencée pour traiter le premier signal de ladite cellule de charge (28) et qui calcule la quantité de fluide dans ledit réservoir (22) sur la base de la force Fs sur ladite cellule de charge (28), une distance A du centre de gravité dudit réservoir (22) à l'axe commun (40A, 40B) et une distance B de l'axe commun (40A, 40B) à l'endroit où ladite extrémité étendue (42) applique la charge Fs à ladite cellule de charge (28) de sorte que le poids actuel FT du réservoir (22) et du fluide est calculé par l'équation FT = (B/A) x (Fs); et
   - un clinomètre (32) couplé électriquement à ladite Unité de Traitement Centrale (34), ledit clinomètre (32) transmettant un deuxième signal à ladite Unité de Traitement Centrale (34) qui est directement proportionnel à l'angle d'inclinaison de l'avion, où l'Unité de Traitement Centrale (34) est agencée pour traiter le deuxième signal et pour ajuster la relation entre le poids total dudit réservoir (22) et la force enregistrée par la cellule de charge (28) d'une manière correspondante.

2. Avion selon la revendication 1, où ledit appareil comprend en outre un filtre transitoire (30) relié électriquement entre ladite cellule de charge (28) et ladite Unité de Traitement Centrale (34) pour supprimer des variations dans le signal provoquées par un mouvement brusque de l'avion.

FIG. 1
PRIOR ART

110

134

130

112

132

114

132

126

132

116    116    132

124

118

YAW

ROLL

PITCH

122    120

EP 0 897 103 B2

FIG. 2

24

42

26

40

FIG. 3A

24

FIG. 3B

40A

26B

42

40B

26A

# FIG. 4

**EP 0 897 103 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5133212 A

- DE 3737658 A1